(19) Europäisches Patentamt / European Patent Office / Office européen des brevets

(11) **EP 2 058 414 B1**

## (12) EUROPEAN PATENT SPECIFICATION

(45) Date of publication and mention
of the grant of the patent:
**19.08.2020 Bulletin 2020/34**

(21) Application number: **08703090.4**

(22) Date of filing: **07.01.2008**

(51) Int Cl.:
*C22C 38/00* (2006.01)      *C22C 38/04* (2006.01)
*C22C 38/60* (2006.01)      *C21D 9/02* (2006.01)
*C21D 9/52* (2006.01)       *F16F 1/02* (2006.01)
*C21D 8/06* (2006.01)       *C21D 1/25* (2006.01)
*C21D 1/42* (2006.01)

(86) International application number:
**PCT/JP2008/050226**

(87) International publication number:
**WO 2008/102573 (28.08.2008 Gazette 2008/35)**

(54) **HIGH-STRENGTH SPRING STEEL WIRE, HIGH-STRENGTH SPRINGS AND PROCESSES FOR PRODUCTION OF BOTH**

HOCHFESTER FEDERSTAHLDRAHT, HOCHFESTE FEDERN UND HERSTELLUNGSVERFAHREN FÜR DIESE

FIL D'ACIER À RESSORT HAUTE RÉSISTANCE, RESSORTS HAUTE RÉSISTANCE ET PROCÉDÉ DE FABRICATION DES DEUX

(84) Designated Contracting States:
**DE FR IT SE**

(30) Priority: **22.02.2007 JP 2007041810**

(43) Date of publication of application:
**13.05.2009 Bulletin 2009/20**

(73) Proprietor: **Nippon Steel Corporation Tokyo (JP)**

(72) Inventors:
• **KUBOTA, Manabu**
  **Tokyo 100-8071 (JP)**
• **HASHIMURA, Masayuki**
  **Tokyo 100-8071 (JP)**

(74) Representative: **Vossius & Partner Patentanwälte Rechtsanwälte mbB Siebertstrasse 3 81675 München (DE)**

(56) References cited:
EP-A1- 1 712 653      JP-A- 09 324 219
JP-A- 09 324 219      JP-A- 2002 356 747
JP-A- 2004 143 482    JP-A- 2006 291 291

• **TAKENORI NAKAYAMA ET AL: "Corrosion Fatigue Characteristics of High Strength Suspension Spring Steel and Improvement of Same", KOBE STEEL TECHNICAL REPORTS, vol. 47, no. 2, 1 September 1997 (1997-09-01), pages 50-53, XP55305531, Japan**
• **KAZUYOSHI KIMURA ET AL: "Influence of Alloy Element on Corrosion Fatigue Life of Spring Steels", DENKI SEIKO - ELECTRIC FURNACE STEEL, vol. 75, no. 1, 1 January 2004 (2004-01-01), pages 19-25, XP55305535, ISSN: 0011-8389, DOI: 10.4262/denkiseiko.75.19**
• **Akio Yoneguchi ET AL: "400 Commonwealth Drive 2000-01-0098 Development of New High Strength Spring Steel and its Application to Automotive Coil Spring", SP-1519) SAE 2000 World Congress Detroit, 6 March 2000 (2000-03-06), XP55305549, DOI: DOI: 10.4271/2000-01-0098 Retrieved from the Internet: URL:http://papers.sae.org/2000-01-0098 [retrieved on 2016-09-26]**
• **XU DEXIANG: "Development of a new kind of high strength spring steel", J.MATER.SCI.TECHNOL. (JMST), vol. 20, no. 5, 2004, pages 557-560, XP002762280, China**

**Description**

TECHNICAL FIELD

The present invention relates to a high strength spring preferable for a suspension spring of an automobile etc., a material for the same, that is, a high strength spring steel wire, and methods of production of the same.

BACKGROUND ART

Due to the demands for lightening the weight of auto parts, suspension springs and the like are being asked to be raised in strength. An important issue in raising the strength of suspension springs is improvement of the corrosion fatigue characteristics. Suspension springs are painted for use, but pebbles etc. bounce against them while the automobile is moving, the parts of the springs contact each other, etc. resulting in unavoidable peeling of the paint, so corrosion and pitting are unavoidable. Fatigue cracks occur in the suspension springs starting from the corrosion pits due to such pitting, so technology for adjusting the ingredients of the springs and spring use steel wire to suppress corrosion pits is being reported (for example, Nakayama, Takenori et al., "Corrosion Fatigue Characteristics of High Strength Suspension Spring Steel and Improvement of Same", Kobe Steel Technical Reports, vol. 47, no. 2, July 1997, issued by Kobe Steel, p. 50 to 53; Kimura, Kazuyoshi et al., "Effects of Alloy Elements on Corrosion Fatigue Life of Spring Steel", Electric Furnace Steel, vol. 75, no. 1, January 2004, Electric Furnace Steel Research Group, p. 19 to 25; Kurebayashi, Yutaka and Yoneguchi, Akio, "1200 MPa Class High Strength Spring Steel 'ND120S'", Electric Furnace Steel, vol. 71, no. 1, January 2000, Electric Furnace Steel Research Group, p. 95 to 101).

However, in low alloy steel used for automobile use suspension springs, suppression of corrosion by adjustment of the alloy elements is difficult. The more sufficiently the corrosion fatigue characteristics can be improved, the less possible it is to suppress corrosion and pitting. Further, in regions where salt is spread on the roads, the suspension springs face tough corrosive conditions, so even if adding a small amount of alloy elements, no effect of suppression of corrosion can be expected any longer.

Therefore, to improve suspension springs in corrosion fatigue characteristics, it is considered effective not to control the corrosion and other surface reactions, but to control the mechanical properties of the steel material to improve the fatigue characteristics. To control the mechanical properties of steel materials having tempered martensite structures such as suspension springs, control of the precipitate precipitating at the time of tempering is important. In particular, spring steel has a relatively large content of carbon, so a large amount of iron carbide inevitably precipitates as well. Further, to obtain high strength, the steel is tempered at a relatively low temperature, so the steel material greatly changes in properties due to changes in the state of the iron carbide precipitating at a low temperature.

Methods for analysis of the precipitation and transition behavior of iron carbide in the tempering process of spring steel using differential scanning calorimetry (DSC) have been reported (Nagao Mamoru et al., "Evaluation of Tempering Behavior of Si-containing Medium-Carbon Steel Using DSC", CAMP-ISIJ, vol. 17, 2004, the Iron and Steel Institute of Japan, p. 359 to 362). However, the relationship between the precipitation and transition behavior of iron carbide and the mechanical properties of steel materials is not described.

Further, as technology for improving the delayed fracture characteristics of high strength springs by the control of the precipitates, methods of making the structure of the spring use steel wire finer and controlling the amount of undissolved carbides have been proposed (for example, Japanese Patent No. 3764715 B and Japanese Patent Publication (A) No. 2006-183137). This technology is technology effective for suppressing fracture and improving toughness in a hydrogen environment. However, even with these methods, the corrosion fatigue characteristics are insufficiently improved. Nothing about fine carbides precipitating at the time of tempering is described.

DISCLOSURE OF THE INVENTION

The present invention solves the above-mentioned problems and has as its object the provision of high strength spring and high strength spring steel wire superior in corrosion fatigue characteristics suitable for the suspension spring of an automobile etc. and methods of production of the same.

The present invention is defined by the claims and provides a spring suppressing the precipitation of cementite (hereinafter sometimes simply indicated as θ) to suppress deterioration of corrosion fatigue characteristics and causing the precipitation of epsilon iron carbide (called "ε carbide") to achieve a high strength and a material for the same, that is, a spring use steel wire, and furthermore methods or production suitably controlling the relationship between the temperature and time of tempering and the composition of ingredients of the steel.

# EP 2 058 414 B1

## BRIEF DESCRIPTION OF THE DRAWINGS

FIG. 1 is an example of the results of differential scanning calorimetry of a test piece after quenching and before tempering.

FIG. 2 is an example of the results of differential scanning calorimetry of a test piece after tempering.

## BEST MODE FOR CARRYING OUT THE INVENTION

The inventors intensively studied the various types of factors affecting the corrosion fatigue characteristics of high strength suspension spring and discovered the following, that is,

(i) If small corrosion pits in the initial stage are formed in the suspension spring due to corrosion and pitting, fatigue cracks form starting from these and start to spread.

(ii) In the case of high strength steel such as suspension springs, if the toughness is low, the fatigue cracks spread brittlely and the speed of spread of fatigue cracks becomes greater.

(iii) Due to the above reasons of (i) and (ii), improvement of the toughness of the matrix of the suspension springs leads to longer corrosion fatigue life of the springs and improvement of the corrosion fatigue characteristics.

(iv) To improve the toughness of spring use steel, it is extremely effective to add a suitable amount of Si to shift the temper embrittlement temperature region to the high temperature side and simultaneously reduce the amount of C to a suitable range, and, further, to obtain the targeted strength, perform the tempering at a low temperature, that is, at the temper embrittlement temperature region or less.

(v) The iron carbide precipitated at the steel material tempered at the temper embrittlement temperature region or less is ε carbide. Due to this, high strength and high toughness can both be achieved. On the other hand, the toughness drops when cementite precipitates.

(vi) In a steel material to which suitable amounts of C and Si are added and ε carbide is made to precipitate, if adding Ti and B, the toughness can be further improved.

(vii) Differential scanning calorimetry (DSC) can be used to identify the iron carbide precipitated in the steel.

(viii) When a peak of an exothermic reaction due to the transition to cementite is observed by DSC, high strength and high toughness can both be achieved. On the other hand, in a steel material where no clear exothermic reaction peak is observed by DSC, excessive precipitation of θ causes a drop in toughness. Further, in a tempered steel material, when peaks of exothermic reactions due to precipitation of ε carbide and transition to cementite (θ) are both observed, the yield ratio is low and the settling characteristic becomes inferior.

Below, the method of identification of iron carbide by DSC will be explained. DSC is a method of evaluating the precipitation behavior of metal materials by detection of the emission of heat and absorption of heat at the time of raising the temperature.

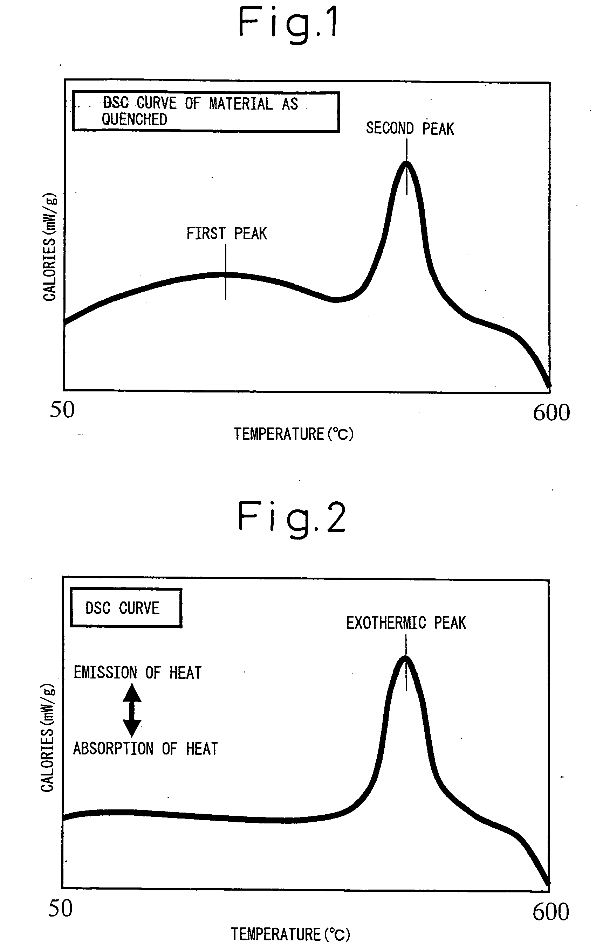

If measuring a material before tempering, that is, a steel material as quenched, by DSC with a temperature elevation rate of 0.25°C/s, as shown in FIG. 1, a peak of exothermic reaction due to precipitation of ε carbide is observed at the low temperature side, while a peak of exothermic reaction due to transition to θ is observed at the high temperature side. Note that in addition, a peak of exothermic reaction due to breakdown of residual γ has also been reported, but in the case of spring steel, the amount of residual γ is several %. The peak of exothermic reaction is also extremely weak, so need not be considered.

The temperatures of the peaks of exothermic reactions due to the precipitation of ε carbide and the transition of ε carbide to θ change depending on the steel ingredients. In the case of steel such as spring steel to which Si is added in an amount of 1% or more, a low temperature side peak is observed at 300°C or less and a high temperature side peak is observed in a 300°C or more temperature region. Below, the peak of exothermic reaction due to the precipitation of ε carbide observed at 300°C or less will be defined as the "first peak", while the peak of exothermic reaction due to transition of ε carbide to θ observed at 300°C or more will be defined as the "second peak".

If measuring by DSC a tempered steel material in which the iron carbide precipitated is only ε carbide, the precipitation of ε carbide has already been completed and the ε carbide changes to θ at the time of raising the temperature, so, as shown in FIG. 2, the first peak is not observed. Only the second peak is observed. In the case of such a precipitated state, both high strength and high toughness can be obtained. On the other hand, if measuring by DSC a tempered steel material with precipitated iron carbide of only θ, the precipitation of ε and transition to θ has already ended, so no clear precipitation peak is observed. In such a state of precipitation, the toughness falls.

Further, if measuring by DSC a tempered steel material where no θ precipitates and ε carbide insufficiently precipitates, in the same way as a steel material as quenched shown in FIG. 1, the first peak and the second peak are both observed. This is for example a case of tempering by a lower temperature than the suitable conditions. The tempering is insufficient, so the yield ratio is low and the settling characteristic is inferior, so use as a spring is not possible..

Below, the present invention will be explained in detail.

C: C is an element required for obtaining a high strength, so it is necessary to add 0.35% or more. On the other hand, if adding over 0.50% of C, the toughness falls. Further, if excessively adding C, the tempering temperature for obtaining the desired strength rises, the amount of production of cementite (θ) increases, and it is no longer possible to obtain both high strength and high toughness, so the upper limit is preferably made 0.45% or less.

Si: Si is an element effective for strengthening the steel and for improvement of the settling characteristic of the spring and is an important element for shifting the temperature at which the ε carbide changes to θ to the high temperature side. Due to the addition of Si, the temper embrittlement temperature region is shifted to the high temperature side. If performing the tempering under the conditions of formula 1', the precipitation of ε carbide causes the strength to rise, suppresses the change to θ to avoid temper embrittlement, and enables the achievement of both the high strength and high toughness:

$$16000 \leq (T - 40 \times [Si\%]) \times (31.7 + \log t) \leq 23000 \cdots (formula\ 1')$$

where, T: tempering temperature (K), t: tempering time (s), and [Si%]: Si content [mass%].

To obtain this effect, Si must be added in an amount of 1.00% or more. On the other hand, if adding Si over 3.00%, decarburization at the time of rolling or heat treatment of the wire material is assisted, so the upper limit has to be made 3.00%. The preferred range is 1.50% to 2.50%.

Mn: Mn is an element effective for improvement of the hardenability. If added together with Si, the effect is exhibited of suppressing the transition from ε carbide to θ. To obtain this effect, Mn must be added in an amount of at least 0.10%, but if added over 2.00%, center segregation at the time of casting is assisted and the toughness falls. Therefore, the amount of Mn has to be made 0.10 to 2.00% in range. Note that the preferred range of the amount of Mn is 0.15 to 1.00%.

P, S: P and S are impurities. In particular, P is an element which segregates at the old austenite grains and causes embrittlement of the grain boundaries and lowers the toughness. The upper limits of P and S have to be limited to 0.015% or less. Further, P and S are preferably reduced as much as possible. The preferable upper limits are 0.010% or less.

Furthermore, Ti and B are preferably added to restrict the upper limit of N.

Ti: Ti is an element bonding with the N in the steel to cause precipitation of TiN and thereby fix the N, so contributes to the reduction of the amount of dissolved N. Due to the reduction of the amount of dissolved N, the formation of BN is prevented and the effect of improvement of the hardenability of B is obtained. To fix the N in the steel, it is preferable to add Ti in an amount of 3.5N or more. However, even if adding over 0.100% of Ti, the effect becomes saturated, so the upper limit should be made 0.100% or less. Further, to suppress the reduction in toughness due to the coarsening of the TiN and Ti(CN), the upper limit of the amount of Ti is preferably made 0.040% or less.

N is an impurity and is preferably restricted to 0.0100% or less. Further, the smaller the content of N, the smaller the amount of addition of Ti that is possible and the smaller the amount of TiN produced. Therefore, N is preferably reduced as much as possible. The preferable upper limit is 0.0060% or less.

B: B is an effective element for improvement of the hardenability of steel when added in a fine amount. It also has the effect of segregating at the old austenite grain boundaries to strengthen the crystal grain boundaries and improve the toughness. In particular, when B is added to steel containing the amount of C and the amount of Si in the range of the present invention, there is the effect of the further improvement of the toughness, so 0.0010% or more of B is added. On the other hand, even if adding B in over 0.0100%, the effect becomes saturated. In the present invention, 0.0100% or less of B is added. The preferred range of the amount of B is 0.0010 to 0.0030%. Note that to obtain the effect of addition of B, it is preferable to reduce the amount of dissolved N to prevent the formation of BN. Therefore, restriction of the amount of N and addition of Ti are extremely effective.

Furthermore, one or more types of elements of Mo, Cr, Ni, and Cu contributing to the improvement of the hardenability may be selectively included.

Mo: Mo is preferably added in an amount of 0.05% or more to obtain the effect of improvement of the hardenability, but if added over 1.00%, the alloying cost becomes large and the economicalness is sometimes impaired. Therefore, the content of Mo is preferably made 0.05 to 1.00% in range. A more preferable range is 0.10 to 0.50%.

Cr: Cr is preferably added in an amount of 0.05% or more to obtain the effect of improvement of the hardenability, but if added over 1.50%, the toughness is sometimes impaired. Therefore, the content of Cr is preferably made 0.05 to 1.50% in range. A more preferable range is 0.10 to 0.80%.

Ni: Ni is preferably added in an amount of 0.05% or more to obtain the effect of improvement of the hardenability, but if added over 1.00%, the alloying cost becomes large and the economicalness is sometimes impaired. Therefore, the content of N is preferably made 0.05 to 1.00% in range. A more preferable range is 0.10 to 0.50%.

Cu: Cu is preferably added in an amount of 0.05% or more to obtain the effect of improvement of the hardenability, but if added over 1.00%, the hot ductility falls, the formation of cracks, scratches, etc. at the time of continuous casting and hot rolling is assisted, and the producibility of the steel is sometimes impaired. Therefore, the content of Cu is preferably made 0.05 to 1.00% in range. The preferable range is 0.10 to 0.50%.

Furthermore, one or both of Nb and V, contributing to the increased fineness of the austenite crystal grains, may be included.

Nb: Nb is preferably added in an amount of 0.010% or more to obtain the effect of improvement of toughness by the increased fineness of the structure, but even if added over 0.010%, the effect is saturated. Therefore, the content of Nb is preferably 0.010 to 0.100% in range. A more preferable range is 0.015 to 0.040%.

V: V is preferably added in an amount of 0.05% or more to obtain the effect of improvement of toughness by the increased fineness of the structure, but even if added over 0.20%, the effect is saturated. Therefore, the content of V is preferably 0.05 to 0.20% in range. A more preferable range is 0.10 to 0.15%.

If decarburization occurs at the surface of the spring and spring use steel wire, the fatigue strength sometimes falls, so Sb may be added to suppress the decarburization.

Sb: Sb is an element precipitating at the surface of the steel material and suppressing the decarburization at the time of heating for hot rolling, at the time of cooling after rolling, at the time of heating for quenching, etc. To obtain the effect of suppression of decarburization, it is preferable to add Sb in an amount of 0.001% or more, but if added over 0.050%, the hot workability and cold workability sometimes deteriorate. Therefore, the content of Sb is preferably made 0.001 to 0.050% in range. A more preferable range is 0.002 to 0.020%.

In the present invention, the amount of Al is not defined, but it is also possible to add Al as a deoxidizing element. Al is also an element forming a nitride and making the austenite crystal grains finer and contributes to the improvement of toughness through the increased fineness of the structure. When using Al for deoxidation, usually 0.010 to 0.100% is included. Further, when desiring to suppress formation of Al-based inclusions, Si, Mn, etc. may be used for deoxidation without adding Al.

Iron carbide: To obtain a high strength spring steel and high strength spring superior in corrosion fatigue characteristics, it is necessary to form $\varepsilon$ carbide and suppress the transition to cementite ($\theta$). $\varepsilon$ carbide is a finer iron carbide compared with $\theta$ and is extremely effective for improvement of strength and has little detrimental effect on toughness. The suitably tempered high strength spring steel and high strength spring of the present invention have $\varepsilon$ carbide and are suppressed in transition to $\theta$ so are excellent in corrosion fatigue characteristics.

The iron carbide of the high strength spring and high strength spring steel of the present invention can be identified by the later explained differential scanning calorimetry.

Differential scanning calorimetry: In differential scanning calorimetry, the temperature elevation rate is important. The iron carbide of the high strength spring and high strength spring steel of the present invention is identified by a temperature elevation rate of 0.25°C/s. When the range of 50°C to 600°C is measured by this temperature elevation rate, the high strength spring and high strength spring steel of the present invention, as shown in FIG. 2, exhibit an exothermic reaction of only the second peak at 450°C or more. In this case, it is possible to judge that the $\varepsilon$ carbide in the steel changes to cementite during DSC measurement. That is, when the temperature of the exothermic peak observed is only 450°C or more, sufficient $\varepsilon$ carbide is already formed in the steel and transition to $\theta$ is suppressed, so high strength and high toughness can both be achieved.

On the other hand, when a clear exothermic reaction is not shown, it is judged that the transition to $\theta$ has been completed. In this case, excessive $\theta$ is being formed in the steel, so the spring and spring steel fall remarkably in toughness.

Further, the temperature of the second peak changes due to the composition of ingredients of the steel, in particular the amount of Si. When the amount of Si is small, if less than 450°C, there is sometimes a second peak. With tempering, there is easy transition to $\theta$. In steel with a second peak of less than 450°C, $\theta$ is excessively formed after tempering, so the toughness falls. Note that in steel with a temperature of the second.peak of less than 450°C, even if performing the tempering under suitable conditions, part of the $\varepsilon$ carbide changes to $\theta$, so if compared with steel having a temperature of the second peak of 450°C or more, the height of the second peak becomes lower.

In the case of a steel material as quenched or insufficient formation of $\varepsilon$ carbide, as shown in FIG. 1, a first peak and second peak of exothermic reaction are exhibited. For this reason, when exhibiting both the peak of the exothermic reaction accompanying a precipitation reaction of $\varepsilon$ carbide and the peak of exothermic reaction when the $\varepsilon$ carbide changes to $\theta$, the tempering is insufficient and the $\varepsilon$ carbide insufficiently precipitates, so the yield ratio falls.

Quenching conditions: The heating temperature of quenching of the spring and spring use steel wire is made 850°C or more to make the structure austenitic, but if over 1000°C, coarsening of the austenite crystal grains is invited. Therefore, it is necessary to make the heating temperature at the quenching 850 to 1000°C in range. The preferable range is 900°C to 990°C. Note that the heating may be performed by the method of furnace heating, high frequency induction heating, etc. The heating time is usually 5 to 3600 s. It is also possible to heat the spring use steel wire to form it hot to a spring shape and perform cooling by quenching (so-called "hot formed spring"). The method of quenching cooling may be oil cooling, water cooling, etc. Due to the quenching, a mainly martensite structure is obtained.

Tempering conditions: To obtain both high strength and high toughness after quenching, tempering is performed under conditions of formula 1':

$$16000 \leq (T-40 \times [Si\%]) \times (31.7 + \log t) \leq 23000 \dots (1')$$

where, T: tempering temperature (K), t: tempering time (s), [Si%]: Si content [mass%].

When $(T-40 \times [Si\%]) \times (31.7 + \log t)$ is less than 16000, the tempering is insufficient, the yield ratio is low, and the settling characteristic of the spring falls. If over 23000, cementite ($\theta$) precipitates and the toughness falls. Note that the term of the content of Si in the formula considers the effect of Si in making the transition from $\varepsilon$ carbide to $\theta$ shift to the high temperature, long time side. In the present invention, the range of the tempering conditions is:

$$18000 \leq (T-40 \times [Si\%]) \times (31.7 + \log t) \leq 22000$$

Note that the cooling after tempering may be performed by either air cooling or water cooling and is not particularly limited.

Note that it is also possible not to form the spring hot, but to perform the quenching and tempering in the state of the rod shape to obtain spring use steel wire, form this into a spring cold, then perform stress relief annealing. The springs produced by hot forming and cold forming are both shot peened, painted, set, and otherwise processed for use as suspension springs.

Example 1

Below, examples will be used to further explain the present invention.

Converter produced steels having the compositions shown in Table 1 were produced by continuous casting and, in accordance with need, soaked and diffusion treated and cogged to obtain 162 mm square rolled materials. Next, hot rolling was performed to obtain wire material shapes of diameters of 13 mm. These were annealed in accordance with need, then cold drawn, then cut to predetermined lengths to obtain rods.

Next, these were heated in a heating furnace to 980°C and held there for 30 minutes, then the rods were wrapped around a drum hot to form them into predetermined spring shapes which were then immediately immersed in oil for quenching. Further, the material for obtaining the tensile test piece and Charpy impact test piece was quenched as in a rod shape without forming it into a spring shape.

Next, a spring shaped material and rod material were tempered under the conditions shown in Table 2. The heating method in the tempering was made furnace heating or high frequency induction heating. A tensile test piece with an 8 mm diameter of the parallel part and a U-notch test piece based on JIS Z 2242 (subsize, width 5 mm) were fabricated from a tempered rod and used for a tensile test and Charpy impact test.

In the tensile test, the tensile strength and the 0.2% yield strength were measured and the yield ratio was found. The tensile strength and yield ratio preferable as a suspension spring were defined as 1800 MPa or more and 0.85 or less. If satisfying these, the strength and settling characteristic are judged to be good when used as a suspension spring. The test temperature in the Charpy impact test was made 20°C. Further, a sample with an impact value of 75 $J/cm^2$ or more was deemed good. Due to this, it was judged that the corrosion fatigue characteristics were improved.

Further, a test piece for differential scanning calorimetry (length 3 × width 3 × thickness 1 mm) was taken from the spring shaped material. The DSC curve was measured under measurement conditions of the differential scanning calorimetry of an atmospheric gas: $N_2$ (30 ml/min), measurement temperature range: 50 to 600°C, cell: aluminum, and reference: $\alpha$-$Al_2O_3$ and with a temperature elevation rate of 0.25°C/s to find the temperatures of the exothermic peaks. These test results are shown together in Table 2. Note that the "-" of the DSC exothermic peak of Table 2 indicates that no clear peak is seen. Further, the rod material was cold formed into a spring shape, then similarly subjected to mechanical tests and measured for DSC curve. It was confirmed that characteristics equal to the results shown in Table 2 are obtained.

As shown in Table 2, the steel materials of the Manufacturing Nos. 1 to 10 of the present invention are superior to the comparative examples in toughness and characteristics as suspension springs. (Manufacturing Nos. 5 to 8 are Reference Examples.) On the other hand, Manufacturing No. 11 has an amount of C over the range of the present invention, so a high impact value is not obtained. Manufacturing No. 12 has an amount of C not satisfying the range of the present invention, so the tensile strength becomes lower as quenched and the tensile strength as a suspension spring cannot be obtained. Manufacturing Nos. 13 to 15 have amounts of Si not satisfying the range of the present invention, so the temperatures of the second peaks are low, $\theta$ forms in the steels, and high impact values cannot be obtained.

Manufacturing No. 16 has an amount of Mn over the range of the present invention, so a high impact value cannot be obtained. Nos. 17 and 19 have high tempering temperatures and has tempering conditions over the ranges of the present invention, so cementite precipitates, the exothermic peaks in DSC are not clear, and high impact values cannot be obtained. Manufacturing No. 18 has a low tempering temperature and therefore tempering conditions not reaching the range of the present invention, so the tempering is insufficient and $\varepsilon$ carbides are insufficiently formed, so even at less than 300°C, an exothermic peak is caused, the yield ratio is low, and use as a suspension spring is not possible.

Table 1

| | Ingredient (mass%) | | | | | | | | | | | | | | | 3.5 x [N%] | Remarks |
|---|---|---|---|---|---|---|---|---|---|---|---|---|---|---|---|---|---|
| | C | Si | Mn | P | S | N | Ti | B | Mo | Cr | Ni | Cu | Nb | V | Sb | | |
| A | 0.40 | 1.99 | 0.22 | 0.005 | 0.005 | 0.0040 | 0.035 | 0.0025 | 0.35 | - | - | - | - | - | - | 0.014 | Inv. ex. |
| B | 0.40 | 1.73 | 0.40 | 0.004 | 0.002 | 0.0035 | 0.026 | 0.0015 | 0.35 | - | - | - | - | - | - | 0.012 | |
| C | 0.40 | 2.00 | 0.44 | 0.001 | 0.015 | 0.0051 | 0.033 | 0.0018 | 0.25 | - | 0.05 | 0.05 | - | 0.05 | - | 0.018 | |
| D | 0.40 | 1.75 | 0.51 | 0.015 | 0.001 | 0.0025 | 0.035 | 0.0010 | 0.25 | 0.05 | - | - | 0.010 | - | - | 0.009 | |
| E | 0.35 | 3.00 | 0.88 | 0.002 | 0.002 | 0.0063 | - | - | - | - | - | - | - | - | - | 0.022 | Reference |
| F | 0.50 | 1.00 | 0.32 | 0.003 | 0.002 | 0.0043 | - | - | 1.00 | - | - | - | - | - | - | 0.015 | |
| G | 0.38 | 2.20 | 2.00 | 0.002 | 0.004 | 0.0015 | - | - | - | - | - | - | 0.100 | - | - | 0.005 | |
| H | 0.45 | 1.50 | 0.10 | 0.006 | 0.003 | 0.0028 | 0.100 | - | - | - | 1.00 | - | - | - | - | 0.010 | |
| I | 0.42 | 1.90 | 0.15 | 0.005 | 0.006 | 0.0029 | 0.020 | 0.0022 | - | 1.50 | 0.50 | 1.00 | - | 0.20 | - | 0.010 | Inv. ex. |
| J | 0.40 | 2.01 | 0.25 | 0.005 | 0.004 | 0.0035 | 0.032 | 0.0020 | 0.36 | - | - | - | - | - | 0.0050 | 0.012 | |
| K | <u>0.55</u> | 1.90 | 0.45 | 0.003 | 0.006 | 0.0045 | 0.034 | 0.0015 | 0.37 | - | - | - | - | - | - | 0.016 | Comp. ex. |
| L | <u>0.32</u> | 1.85 | 0.51 | 0.008 | 0.005 | 0.0030 | 0.031 | 0.0023 | 0.29 | - | - | - | - | - | - | 0.011 | |
| M | 0.41 | <u>0.77</u> | 0.55 | 0.007 | 0.003 | 0.0033 | 0.029 | 0.0019 | 0.33 | - | - | - | - | - | - | 0.012 | |
| N | 0.42 | <u>0.93</u> | 0.45 | 0.009 | 0.005 | 0.0040 | 0.030 | 0.0021 | 0.33 | - | - | - | - | - | - | 0.014 | |
| O | 0.45 | <u>0.95</u> | 0.77 | 0.010 | 0.003 | 0.0035 | - | - | 0.40 | 0.76 | 0.05 | 0.05 | 0.015 | - | - | 0.012 | |
| P | 0.39 | 1.53 | <u>2.31</u> | 0.006 | 0.003 | 0.0039 | - | - | - | - | - | - | - | - | - | 0.014 | |

"-" in the elements mean no addition.
The underlines in the table show outside the range of the present invention.

Table 2

| Man. No. | Steel no. | [Si%] | Tempering conditions | | Cooling | (T-40×[Si%]) × (31.7+logt) | DSC exothermic peak | | Tensile strength MPa | Yield ratio | Impact value J/cm² | Remarks |
|---|---|---|---|---|---|---|---|---|---|---|---|---|
| | | | Heating temp. °C | Heating time s | | | First peak °C | Second peak °C | | | | |
| 1 | A | 1.99 | 375 | 3600 | Air | 20040 | - | 480 | 1954 | 0.91 | 118 | Inv. ex. |
| 2 | B | 1.73 | 360 | 1800 | Air | 19708 | - | 469 | 1923 | 0.89 | 120 | |
| 3 | C | 2.00 | 390 | 1800 | Air | 20379 | - | 481 | 1999 | 0.93 | 117 | |
| 4 | D | 1.75 | 410 | 30 | Water | 20338 | - | 471 | 1910 | 0.94 | 103 | |
| 5 | E | 3.00 | 450 | 3600 | Air | 21260 | - | 521 | 1899 | 0.95 | 97 | Reference |
| 6 | F | 1.00 | 410 | 3600 | Air | 22670 | - | 451 | 2123 | 0.95 | 91 | |
| 7 | G | 2.20 | 400 | 3600 | Air | 20625 | | 488 | 1813 | 0.94 | 96 | |
| 8 | H | 1.50 | 400 | 3600 | Air | 21612 | - | 461 | 1971 | 0.93 | 94 | |
| 9 | I | 1.90 | 430 | 5 | Air | 20314 | - | 476 | 1944 | 0.92 | 101 | Inv. ex. |
| 10 | J | 2.01 | 375 | 3600 | Air | 20011 | - | 480 | 1955 | 0.91 | 119 | |
| 11 | K | 1.90 | 375 | 3600 | Air | 20167 | - | 477 | 1956 | | 45 | Comp. ex. |
| 12 | L | 1.85 | 350 | 3600 | Air | 19356 | - | 474 | 1768 | 0.85 | 89 | |
| 13 | M | 0.77 | 395 | 3600 | Air | 22465 | - | 432 | 1932 | 0.95 | 53 | |
| 14 | N | 0.93 | 345 | 3600 | Air | 20477 | - | 438 | 1926 | 0.93 | 56 | |
| 15 | O | 0.95 | 350 | 3600 | Air | 20625 | - | 448 | 1997 | 0.93 | 55 | |
| 16 | P | 1.53 | 375 | 3600 | Air | 20688 | - | 462 | 1933 | 0.94 | 49 | |
| 17 | A | 1.99 | 460 | 3600 | Air | 23036 | - | - | 1803 | 0.95 | 48 | |
| 18 | A | 1.99 | 300 | 3600 | Air | 17395 | 230 | 480 | 2166 | 0.66 | 71 | |
| 19 | F | 1.00 | 440 | 3600 | Air | 23727 | - | - | 1947 | 0.95 | 42 | |

Underlines in Steel No., [Si%], (T-40×[Si%])×(31.7+logt), DSC exothermic peak temperature indicate outside the range of the present invention. Underlines in tensile strength, yield ratio, and impact value indicate target not yet achieved.

EP 2 058 414 B1

Example 2

Wire materials of diameters of 13 mm of Steel Nos. A to J shown in Table 1 hot rolled in the same way as Example 1 were used to evaluate the effect of suppression of decarburization by the addition of Sb. The wire materials were straightened, then ground at their outer circumference to remove the effects of the initial surface layers and obtain $12\phi$ rod test pieces. The test pieces were heated to 870°C, was then held for 30 minutes, then were transferred to a 750°C furnace, held there for 60 minutes, then air-cooled. The heat treatment was all performed in the atmosphere. The heat treatment conditions were heat treatment conditions very conducive to decarburization. After the heat treatment, the C cross-sections of the rod test pieces were cut, polished, and corroded by nitral and the depths of the decarburized layers of the surfaces were measured.

The results are shown in Table 3. Steel A has no Sb added, while Steel J has substantially the same ingredients as Steel A, but has Sb added. As clear from Table 3, due to the addition of Sb, the depth of the decarburization layer becomes half or less and decarburization is suppressed.

Table 3

| Steel no. | [Sb%] | Heat treatment conditions | Heat treatment atmosphere | Decarburization depth ($\mu$m) | Remarks |
|---|---|---|---|---|---|
| A | - | 870°C×30 min → 750°C×60 min → air-cooling | Air | 110 | Inv. ex. |
| J | 0.0050 | | | 40 | |

INDUSTRIAL APPLICABILITY

According to the high strength spring and high strength spring steel wire with superior corrosion fatigue characteristics and methods of production of the same of the present invention, it becomes possible to reduce the size and lighten the weight of a suspension spring and greatly contribute to the improvement of the fuel economy and improvement of the performance of an automobile etc.

**Claims**

1. A high strength spring steel wire **characterized by** consisting of, by mass%,
   C: 0.35 to 0.50%,
   Si: 1.00 to 3.00%,
   Mn: 0.10 to 2.00%, and
   B: 0.0010 to 0.0100%,
   restricting
   P to 0.015% or less and
   S to 0.015% or less, further optionally containing, by mass%,
   Ti: 0.100% or less
   restricting
   N to 0.0100% or less, and/or one or more of Mo: 0.05 to 1.00%,
   Cr: 0.05 to 1.50%,
   Ni: 0.05 to 1.00%,
   Cu: 0.05 to 1.00%,
   Nb: 0.010 to 0.100%,
   V: 0.05 to 0.20%,
   Sb: 0.001 to 0.050% and/or
   Al: 0.010 to 0.100%,
   having a balance of Fe and unavoidable impurities, and
   when raising the temperature in the range from 50°C to 600°C by 0.25°C/s and measuring the differential scanning calories, having the only peak of the exothermic reaction present at 450°C or more.

2. A high strength spring steel wire as set forth in claim 1 **characterized by** having contents of Ti and N satisfying Ti$\geq$3.5N.

3. A high strength spring **characterized by** consisting of, by mass%,

C: 0.35 to 0.50%,
Si: 1.00 to 3.00%,
Mn: 0.10 to 2.00%, and
B: 0.0010 to 0.0100%,
restricting
P to 0.015% or less and
S to 0.015% or less, further optionally containing, by mass%,
Ti: 0.100% or less
restricting
N to 0.0100% or less, and/or one or more of
Mo: 0.05 to 1.00%,
Cr: 0.05 to 1.50%,
Ni: 0.05 to 1.00%,
Cu: 0.05 to 1.00%,
Nb: 0.010 to 0.100%,
V: 0.05 to 0.20%,
Sb: 0.001 to 0.050% and/or
Al: 0.010 to 0.100%,
having a balance of Fe and unavoidable impurities, and
when raising the temperature in the range from 50°C to 600°C by 0.25°C/s and measuring the differential scanning calories, having the only peak of the exothermic reaction present at 450°C or more.

4. A high strength spring as set forth in claim 3 **characterized by**
having contents of Ti and N satisfying
$Ti \geq 3.5N$.

5. A method of production of high strength spring steel wire **characterized by** heating steel wire comprised of the ingredients as set forth in claim 1 or 2 to 850 to 1000°C, quenching it, then tempering it under conditions where the tempering temperature T[K], tempering time t[s], and content Si% [mass%] of Si satisfy the following formula 1:

$$18000 \leq (T - 40 \times [Si\%]) \times (31.7 + \log t) \leq 22000 \quad \ldots \quad (1)$$

6. A method of production of a high strength spring **characterized by** cold forming steel wire comprised of the ingredients as set forth in claim 1 or 2 to a spring shape, heating it to 850 to 1000°C, quenching it, then tempering it under conditions where the tempering temperature T[K], tempering time t[s], and content Si% [mass%] of Si satisfy the following formula 1:

$$18000 \leq (T - 40 \times [Si\%]) \times (31.7 + \log t) \leq 22000 \quad \ldots \quad (1)$$

7. A method of production of a high strength spring **characterized by** heating steel wire comprised of the ingredients as set forth in claim 1 or 2 to 850 to 1000°C, hot forming it into a spring shape, then quenching it, then tempering it under conditions where the tempering temperature T[K], tempering time t[s], and content Si% [mass%] of Si satisfy the following formula 1:

$$18000 \leq (T - 40 \times [Si\%]) \times (31.7 + \log t) \leq 22000 \quad \ldots \quad (1).$$

**Patentansprüche**

1. Hochfester Federstahldraht, **dadurch gekennzeichnet, dass** er in Masseprozent besteht aus:

C: 0,35 bis 0,50 %,
Si: 1,00 bis 3,00 %,
Mn: 0,10 bis 2,00% und

B: 0,0010 bis 0,0100 %,
wobei
P auf 0,015 % oder weniger und
S auf 0,015 % oder weniger beschränkt sind, ferner optional in Masseprozent enthaltend:

Ti: 0,100 % oder weniger,
wobei
N auf 0,0100 % oder weniger beschränkt ist, und/oder eines oder mehrere von:

Mo: 0,05 bis 1,00 %
Cr: 0,05 bis 1,50 %,
Ni: 0,05 bis 1,00 %,
Cu: 0,05 bis 1,00%,
Nb: 0,010 bis 0,100 %
V: 0,05 bis 0,20 %,
Sb: 0,001 bis 0,050 % und/oder
Al: 0,010 bis 0,100 %,
mit Eisen und unvermeidlichen Verunreinigungen als Rest,
wobei bei Temperaturerhöhung im Bereich von 50 °C bis 600 °C um 0,25 °C/s und Messen der Differential-Scanning-Kalorien der einzige Peak der exothermen Reaktion bei 450 °C oder mehr vorhanden ist.

2. Hochfester Federstahldraht nach Anspruch 1, **dadurch gekennzeichnet, dass** sein Gehalt an Ti und N die Formel Ti≥3,5N erfüllt.

3. Hochfeste Feder, **dadurch gekennzeichnet, dass** sie in Masseprozent besteht aus:

C: 0,35 bis 0,50 %,
Si: 1,00 bis 3,00 %,
Mn: 0,10 bis 2,00 % und
B: 0,0010 bis 0,0100 %,
wobei
P auf 0,015 % oder weniger und
S auf 0,015 % oder weniger beschränkt sind, ferner optional in Masseprozent enthaltend:

Ti: 0,100 % oder weniger,
wobei
N auf 0,0100 % oder weniger beschränkt ist, und/oder eines oder mehrere von:

Mo: 0,05 bis 1,00 %
Cr: 0,05 bis 1,50 %,
Ni: 0,05 bis 1,00 %,
Cu: 0,05 bis 1,00 %,
Nb: 0,010 bis 0,100 %
V: 0,05 bis 0,20 %,
Sb: 0,001 bis 0,050 % und/oder
Al: 0,010 bis 0,100 %,
mit Eisen und unvermeidlichen Verunreinigungen als Rest, wobei bei Temperaturerhöhung im Bereich von 50 °C bis 600 °C um 0,25 °C/s und Messen der Differential-Scanning-Kalorien der einzige Peak der exothermen Reaktion bei 450 °C oder mehr vorhanden ist.

4. Hochfeste Feder nach Anspruch 3, **dadurch gekennzeichnet, dass** ihr Gehalt an Ti und N die Formel Ti≥3,5N erfüllt.

5. Verfahren zur Herstellung eines hochfesten Federstahldrahts, das **gekennzeichnet ist durch** Erwärmen des Stahldrahts mit den Inhaltsstoffen nach Anspruch 1 oder 2 auf 850 bis 1000 °C, Abschrecken, dann Härten unter Bedingungen, bei denen die Härtetemperatur T[K], die Härtezeit t[s] und der prozentuale Gehalt an Si [Masseprozent] die folgende Formel 1 erfüllen:

$$18000 \leq (T-40 \times [Si\%]) \times (31{,}7+logt) \leq 22000... \ (1)$$

**6.** Verfahren zur Herstellung einer hochfesten Feder, **gekennzeichnet durch** Kaltumformen von Stahldraht mit den Inhaltsstoffen nach Anspruch 1 oder 2 in eine Federform, Erwärmen auf 850 bis 1000 °C, dann Abschrecken und anschließendes Härten unter Bedingungen, bei denen die Härtetemperatur T[K], die Härtezeit t[s] und der prozentuale Gehalt an Si [Masseprozent] die folgende Formel 1 erfüllen:

$$18000 \leq (T-40 \times [Si\%]) \times (31{,}7+logt) \leq 22000... \ (1)$$

**7.** Verfahren zur Herstellung einer hochfesten Feder, **gekennzeichnet durch** Erwärmen von Stahldraht mit den Inhaltsstoffen nach Anspruch 1 oder 2 auf 850 bis 1000 °C, Warmumformen des Drahts in eine Federform, anschließendes Abschrecken, dann Härten unter Bedingungen, bei denen die Härtetemperatur T[K], die Härtezeit t[s] und der prozentuale Gehalt an Si [Masseprozent] die folgende Formel 1 erfüllen:

$$18000 \leq (T-40 \times [Si\%]) \times (31{,}7+logt) \leq 22000... \ (1).$$

**Revendications**

**1.** Fil d'acier pour ressort de résistance élevée **caractérisé en ce qu'**il consiste en, en % en masse,
C : 0,35 à 0,50 %,
Si : 1,00 à 3,00 %,
Mn : 0,10 à 2,00 %, et
B : 0,0010 à 0,0100 %,
restreignant
P à 0,015 % ou inférieur et
S à 0,015 % ou inférieur, de plus contenant éventuellement, en % en masse,
Ti : 0,100 % ou inférieur
restreignant
N à 0,0100 % ou inférieur, et/ou un ou plusieurs de Mo : 0,05 à 1,00 %,
Cr : 0,05 à 1,50 %,
Ni : 0,05 à 1,00 %,
Cu : 0,05 à 1,00 %,
Nb : 0,010 à 0,100 %,
V : 0,05 à 0,20 %,
Sb : 0,001 à 0,050 % et/ou
Al : 0,010 à 0,100 %,
présentant un reste de Fe et d'impuretés inévitables, et
lors de l'élévation de la température dans l'intervalle de 50°C à 600°C de 0,25°C/s et de la mesure calorimétrique différentielle, présente le seul pic de la réaction exothermique présent à 450°C ou supérieure.

**2.** Fil d'acier pour ressort de résistance élevée selon la revendication 1, **caractérisé en ce qu'**il présente des teneurs en Ti et N satisfaisant Ti ≥ 3,5 N.

**3.** Ressort de résistance élevée **caractérisé en ce qu'**il consiste en, en % en masse,
C : 0,35 à 0,50 %,
Si : 1,00 à 3,00 %,
Mn : 0,10 à 2,00 %, et
B : 0,0010 à 0,0100 %,
restreignant
P à 0,015 % ou inférieur et
S à 0,015 % ou inférieur, de plus contenant éventuellement, en % en masse,
Ti : 0,100 % ou inférieur
restreignant
N à 0,0100 % ou inférieur, et/ou un ou plusieurs de Mo : 0,05 à 1,00 %,

Cr : 0,05 à 1,50 %,
Ni : 0,05 à 1,00 %,
Cu : 0,05 à 1,00 %,
Nb : 0,010 à 0,100 %,
V : 0,05 à 0,20 %,
Sb : 0,001 à 0,050 % et/ou
Al : 0,010 à 0,100 %,
présentant un reste de Fe et d'impuretés inévitables, et
lors de l'élévation de la température dans l'intervalle de 50°C à 600°C de 0,25°C/s et de la mesure calorimétrique différentielle, présente le seul pic de la réaction exothermique présent à 450°C ou supérieure.

4. Ressort de résistance élevée selon la revendication 3, **caractérisé en ce qu'**il présente des teneurs en Ti et N satisfaisants
$Ti \geq 3,5 \, N$.

5. Procédé de production d'un fil d'acier pour ressort de résistance élevée, **caractérisé par** le chauffage de fil d'acier constitué des ingrédients comme défini dans la revendication 1 ou 2 à de 850 à 1 000°C, trempe de celui-ci, puis revenu de celui-ci dans des conditions où la température de revenu T[K], la durée de revenu t[s], et la teneur Si % [% en masse] de Si satisfont la formule 1 suivante :

$$18\,000 \leq (T - 40 \times [Si\,\%]) \times (31{,}7 + \log t) \leq 22\,000 \ldots (1)$$

6. Procédé de production d'un ressort de résistance élevée **caractérisé par** le façonnage à froid de fil d'acier constitué des ingrédients comme défini dans la revendication 1 ou 2 en une forme de ressort, chauffage de celui-ci à de 850 à 1 000°C, trempe de celui-ci, puis revenu de celui-ci dans des conditions où la température de revenu T[K], la durée de revenu t[s], et la teneur Si % [% en masse] de Si satisfont la formule 1 suivante :

$$18\,000 \leq (T - 40 \times [Si\,\%]) \times (31{,}7 + \log t) \leq 22\,000 \ldots (1)$$

7. Procédé de production d'un ressort de résistance élevée **caractérisé par** le chauffage de fil d'acier constitué des ingrédients comme défini dans la revendication 1 ou 2 à de 850 à 1 000°C, façonnage à chaud de celui-ci en une forme de ressort, puis trempe de celui-ci, puis revenu de celui-ci dans des conditions où la température de revenu T[K], la durée de revenu t[s], et la teneur Si % [% en masse] de Si satisfont la formule 1 suivante :

$$18\,000 \leq (T - 40 \times [Si\,\%]) \times (31{,}7 + \log t) \leq 22\,000 \ldots (1)$$

# Fig.1

DSC CURVE OF MATERIAL AS QUENCHED

SECOND PEAK

FIRST PEAK

CALORIES (mW/g)

50    TEMPERATURE (°C)    600

# Fig.2

DSC CURVE

EXOTHERMIC PEAK

EMISSION OF HEAT

ABSORPTION OF HEAT

CALORIES (mW/g)

50    TEMPERATURE (°C)    600

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3764715 B

- JP 2006183137 A

**Non-patent literature cited in the description**

- **NAKAYAMA, TAKENORI et al.** Corrosion Fatigue Characteristics of High Strength Suspension Spring Steel and Improvement of Same. *Kobe Steel Technical Reports,* July 1997, vol. 47 (2), 50-53
- **KIMURA, KAZUYOSHI et al.** Effects of Alloy Elements on Corrosion Fatigue Life of Spring Steel. *Electric Furnace Steel,* January 2004, vol. 75 (1), 19-25

- **KUREBAYASHI, YUTAKA ; YONEGUCHI, AKIO.** 1200 MPa Class High Strength Spring Steel 'ND120S. *Electric Furnace Steel,* January 2000, vol. 71 (1), 95-101
- Evaluation of Tempering Behavior of Si-containing Medium-Carbon Steel Using DSC. **NAGAO MAMORU et al.** CAMP-ISIJ. Steel Institute of Japan, 2004, vol. 17, 359-362